Europäisches Patentamt

European Patent Office

Office européen des brevets

(19)

(11) Veröffentlichungsnummer: **0 169 556**
**B1**

(12) **EUROPÄISCHE PATENTSCHRIFT**

(45) Veröffentlichungstag der Patentschrift :
07.06.89

(21) Anmeldenummer : 85109258.5

(22) Anmeldetag : 24.07.85

(51) Int. Cl.⁴ : **B 23 Q 11/00**, B 23 B 49/00

(54) Vorrichtung zur Überwachung und Steuerung eines Bearbeitungswerkzeuges.

(30) Priorität : 24.07.84 DE 3427148

(43) Veröffentlichungstag der Anmeldung :
29.01.86 Patentblatt 86/05

(45) Bekanntmachung des Hinweises auf die Patenterteilung : 07.06.89 Patentblatt 89/23 .

(84) Benannte Vertragsstaaten :
AT BE CH DE FR GB LI LU NL

(56) Entgegenhaltungen :
GB–A– 2 069 142
US–A– 3 605 909
US–A– 4 031 584

(73) Patentinhaber : Nikisch, Horst, Dipl.-Ing.
Klepperhof 9
D-2804 Lilienthal (DE)

(72) Erfinder : Nikisch, Horst, Dipl.-Ing.
Klepperhof 9
D-2804 Lilienthal (DE)

(74) Vertreter : Eisenführ & Speiser
Martinistrasse 24
D-2800 Bremen 1 (DE)

## Beschreibung

Die Erfindung betrifft eine Vorrichtung zur Überwachung und Steuerung eines Bearbeitungswerkzeuges, welches mittels einer Spannvorrichtung an der Arbeitsspindel einer Werkzeugmaschine befestigbar ist.

Bekannt sind Meßvorrichtungen, die in die Spannvorrichtung von Werkzeugmaschinen eingespannt werden oder in anderer Weise daran befestigbar sind, um die Lage von Werkstückoberflächen abzutasten. Diese Vorrichtungen können mit Wegmeß- und Anzeigesystemen gekoppelt sein, damit die Lage der Oberfläche in Maßeinheiten von einem eingestellten Nullpunkt aus direkt abgelesen werden kann, sobald die Meßvorrichtung durch Heranführen an die Oberfläche diese berührt. In einfacheren Ausführungen gibt es Meßvorrichtungen, die beim Berühren des Werkstücks lediglich ein (zumeist optisches) Signal auslösen, dessen Auswertung der Bedienungsperson überlassen ist. Das Abtasten erfolgt sowohl in axialer Richtung des Werkzeugvorschubs (Oberflächensucher) als auch quer zu dieser (Kantensucher).

Der Nachteil dieser Vorrichtungen, die alle mit einer separaten Meßvorrichtung arbeiten, ist es, dass die Lageinformation über den Berührungspunkt verlorengeht oder durch zusätzliche Einrichtungen gespeichert werden muss, wenn die Meßvorrichtung ausgespannt und durch ein Bearbeitungswerkzeug ersetzt bzw. wenn ein anderes Bearbeitungswerkzeug eingespannt werden muss. Bei Meßvorrichtungen zur Kantensuche kommt als weiterer Nachteil hinzu, dass entweder der Tastkopf des Sensors den gleichen Durchmesser haben muss, wie das nachfolgende Bearbeitungswerkzeug oder eine Durchmesserkorrektur beim anschliessenden Bearbeitungsvorgang vorzunehmen ist. Bei Oberflächensuchern ist im allgemeinen immer eine Werkzeuglängenkorrektur durchzuführen, da die Tastkopflänge praktisch nie mit der Länge des nachfolgenden Bearbeitungswerkzeuges übereinstimmt. Ein weiterer Nachteil reiner Sensorvorrichtungen besteht in der leichten Zerstörbarkeit bei unvorsichtiger Handhabung : Der Berührungspunkt darf nur weich angefahren und darf niemals überfahren werden, was insbesondere bei Kantensuchern zu sehr zeitaufwendigen und mit hoher Aufmerksamkeit durchzuführenden Arbeitsvorgängen führt.

Ausser der Suche des Werkzeug-/Werkstückberührungspunktes ist für spangebende rotierende Bearbeitungswerkzeuge die Drehzahl als Parameter der Schnittgeschwindigkeit von Bedeutung. Hierzu werden Drehzahlgeber eingesetzt, die an die Antriebswelle angekoppelt werden und die Drehzahl aus Pulsfrequenzen ableiten und melden oder in geschlossenen Regelkreisen auf einem eingestellten Wert halten.

Bekannt sind ferner Einrichtungen zur Überwachung des Bearbeitungswerkzeuges, die auf eine charakteristische Abmessung, z. B. die Länge des Werkzeuges eingestellt sind, das Werkzeug ständig oder in bestimmten Bearbeitungsphasen oder Stellungen, z. B. in der Ausgangsstellung abtasten und bei Fehlen des Abtastsignals den Werkzeugbruch melden und entsprechende Funktionen der Maschine auslösen.

Aufgabe der Erfindung ist es, eine Vorrichtung der eingangs genannten Art derart weiterzubilden, dass der Berührungskontakt des Bearbeitungswerkzeuges mit einem Werkstück einfach und genau festgestellt werden kann und zur zuverlässigen Umsteuerung des Spindelantriebes einsetzbar ist.

Diese Aufgabe wird bei der Vorrichtung der eingangs genannten Art erfindungsgemäss dadurch gelöst, dass die Überwachungsvorrichtung als Spannvorrichtung zwischen Arbeitsspindel und Bearbeitungswerkzeug einsetzbar ist sowie ein begrenztes Übertragungsspiel gewährleistet, und dass das Bearbeitungswerkzeug bei Berührungskontakt mit einem Werstück ausgehend von einer einsetzenden Spielbewegung ein Steuersignal erzeugt, das sich zur Steuerung des Spindelantriebs eignet.

Die Vorteile der Erfindung liegen insbesondere darin, dass das Bearbeitungswerkzeug selbst als Tastelement zur Erkennung des Berührungskontaktes Bearbeitungswerkzeug/Werkstück dient, dass mit dem Aufsetzen des Bearbeitungswerkzeuges auf das Werstück ein Steuersignal erzeugt wird, welches zur Umsteuerung des Spindelantriebes herangezogen werden kann, während das Bearbeitungswerkzeug das Lagerspiel durchläuft, d. h. bevor das Bearbeitungswerkzeug in Arbeitseingriff mit dem Werkstück gelangt.

Unabhängig von der Grösse oder Länge des Bearbeitungswerkzeuges sowie unabhängig von der jeweiligen Einspannung des Bearbeitungswerkzeuges lässt sich mit der erfindungsgemässen Vorrichtung — ohne zusätzliche Meßeinrichtungen — der Berührungskontakt zwischen Bearbeitungswerkzeug und Werkstück stets genau in ein Steuersignal umsetzen, und während dann das Bearbeitungswerkzeug das Lagerspiel durchläuft — und während dieser Zeit noch nicht in Arbeitseingriff kommt — lässt sich der Spindelantrieb vom Leerlauf und dem Leerlaufvorschub auf den Arbeitsvorschub und Arbeitsbewegung umsteuern. Auf diese Weise ist sichergestellt, dass der Arbeitseingriff des Bearbeitungswerkzeuges in das Werkstück stets mit dem geeigneten Arbeitsvorschub und der richtigen Arbeitsbewegung bzw. Arbeitsdrehzahl erfolgt.

Gemäss einer besonders bevorzugten Ausführungsform der Erfindung enthält die Spannvorrichtung ein Spannwerkzeug zum Einspannen des Bearbeitungswerkzeuges, welches dem Bearbeitungswerkzeug ein in Achsrichtung der Arbeitsspindel wirksames Axialspiel verleiht. Alternativ lässt sich das Spannwerkzeug auch so lagern, dass es gegenüber der Arbeitsspindel ein Rotationsspiel einführt. Die Spannvorrichtung enthält bevorzugt einen Signalgeber, der von der Spielbewegung des Spannwerkzeuges — oder eines daran befestigten Teiles — mechanisch in eine Aktivstellung setzbar ist, die mittels eines Signalwandlers in das elektrische Steuersignal umgewandelt wird und am Ausgang der Vorrichtung dann zur Verfügung steht. Durch die mechanische Auslösung des Signalgebers wird eine robuste und einfache Möglichkeit zur Erzeugung des Steuersignals mit dem Beginn der Spielbewegung geschaffen. Bevorzugt ist der Signalgeber an dem Spannwerkzeug oder einem daran befestigten Teil angeordnet, um die Spielbewegung des Bearbeitungswerkzeuges direkt und definiert auf den Signalgeber zu übertragen, um auf diese Weise Ungenauigkeiten bei der Aktivierung des Signalgebers zu verhindern.

Gemäss einer besonders bevorzugten Ausführungsform der Erfindung erfolgt die Erzeugung des Steuersignals derart, dass das Steuersignal auch die Periodendauer der Arbeitsbewegung — z. B. Rotationsbewegung — des Bearbeitungswerkzeuges als Information enthält. Das Einsetzen des Steuersignals meldet dann den Berührungskontakt zwischen Bearbeitungswerkzeug und Werkstück, und die Periodendauer des Steuersignals kennzeichnet die Arbeitsbewegung der Spindel, z. B. deren Drehzahl. Das Steuersignal lässt sich dann — neben der Vorschub-Steuerung — auch zur Regelung der Arbeitsbewegung während des Bearbeitungsvorganges einsetzen, wenn sichergestellt wird, dass das Steuersignal nicht nur während der Spielbewegungsphase, sondern auch während der anschliessenden Bearbeitungszeit ständig erzeugt und zur Verfügung gehalten wird.

Gemäss einer besonders bevorzugten Ausführungsform der Erfindung ist der Vorrichtung eine Auswerteelektronik nachgeschaltet, welche vom Steuersignal die gewünschten Steuerbefehle zur Steuerung des Spindelantriebs und des Vorschubs etc. ableitet. Bevorzugt wird das Steuersignal in der Auswerteelektronik ständig mit einem vorgegebenen Sollverlauf verglichen, und es wird ein einen Werkzeugbruch kennzeichnendes Anzeigessignal abgegeben, wenn das Steuersignal vorzeitig endet. In diesem Fall wird zusätzlich der Antrieb mittels eines weiteren Steuerbefehls abgeschaltet, um die bei Werkzeugbruch ansonsten leicht auftretenden erheblichen Beschädigungen zu vermeiden.

Vorteilhafte Weiterbildungen der Erfindung sind durch die Merkmale der Unteransprüche gekennzeichnet.

Im folgenden wird ein Ausführungsbeispiel der Erfindung anhand der Zeichnung näher erläutert.

Es zeigen :

Fig. 1   einen Querschnitt durch eine erfindungsgemässe Vorrichtung ;

Fig. 2   ein Blockdiagramm der Auswerteelektronik ;

Fig. 3   ein mittels der erfindungsgemässen Vorrichtung bearbeitetes Werkstück ;

Fig. 4   einen Querschnitt durch eine alternative Lagerung des Spannwerkzeugs und des Signalgebers ; und

Fig. 5   eine Aufsicht auf die Anordnung gemäss Fig. 4.

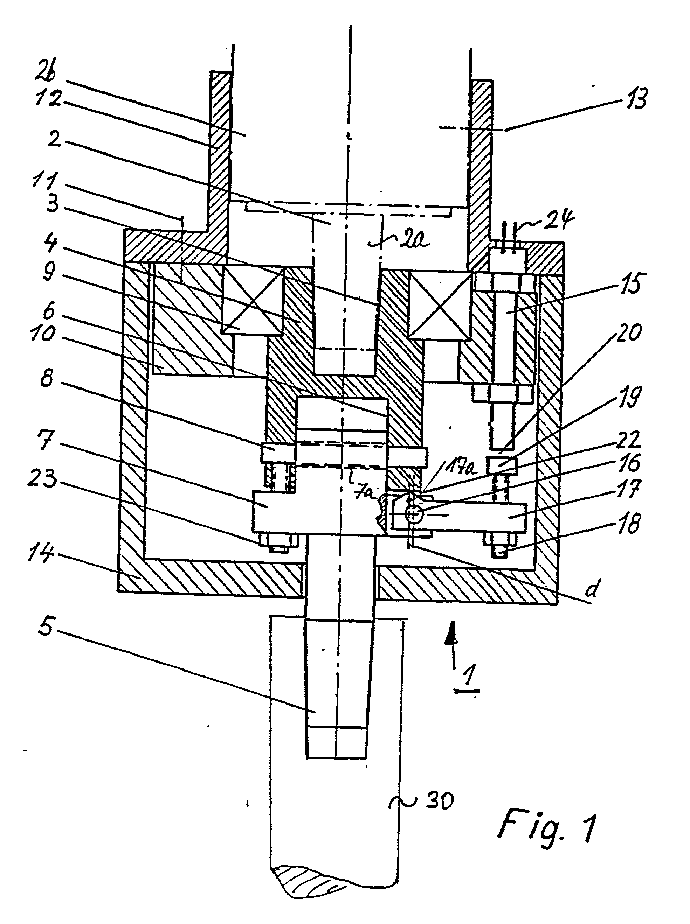

In Fig. 1 ist eine Vorrichtung zur Überwachung und Steuerung eines Bearbeitungswerkzeuges 30 dargestellt, welches mit einer Spannvorrichtung 1 an die Arbeitsspindel 2 einer Werkzeugmaschine ansetzbar und befestigbar ist. Die Spannvorrichtung 1 besitzt einen Zentralkörper 4 mit einer konischen Ausnehmung 3, der auf einen entsprechenden Konus 2a der Arbeitsspindel 2 aufsteckbar und erforderlichenfalls mit weiteren Befestigungsmitteln (nicht dargestellt) an der Arbeitsspindel 2 befestigbar ist. Der Zentralkörper 4 besitzt auf der der Konusausnehmung 3 abgewandten Seite eine zylindrische Ausnehmung 6, in welcher ein Druckkörper 7 mit vorgegebenem Spiel in Richtung der Achse der Arbeitsspindel zentrisch verschiebbar gelagert ist. Der Druckkörper 7 besitzt eine Querbohrung 7a, durch welche ein Querstift 8 hindurchgeführt und in dem Zentralkörper 4 befestigt ist. Die Querbohrung 7a besitzt einen gegenüber dem Querstift 8 vergrösserten Durchmesser, der dem Druckkörper 7 die zur Verwirklichung des axialen Lagerspiels notwendige Bewegungsfreiheit belässt. In einer alternativen Ausgestaltung lässt sich in der Ausnehmung 6 zwischen Zentralkörper 4 und Druckkörper 7 eine Stirnverzahnung vorsehen, um das Antriebsmoment insbesondere bei grösseren Bearbeitungswerkzeugen und -leistungen von der Arbeitsspindel 2 auf das Bearbeitungswerkzeug 30 zu übertragen.

Am Druckkörper 7 ist ein Spannwerkzeug 5 — dargestellt ist ein Konus 5 — befestigt, auf dem das Werkzeug 30 aufgezogen oder eingespannt werden kann.

Die Kraftübertragungsteile 4, 7 und 8 sind mit einem Lager 9 im feststehenden Lagerring 10 gelagert. Die Feststellung des Lagerringes 10 erfolgt mittels der Befestigungsschrauben 11 an dem Flansch 12, der mit Klemmschrauben 13 an einer die Arbeitsspindel 2 umgebenden feststehenden Abdeckung 2b befestigt ist. Alle Funktionseinheiten der Spannvorrichtung 1 sind umschlossen von dem Gehäuse 14, das an dem Flansch 12 befestigt ist.

In dem Gehäuse 14 ist ein Signalgeber vorgesehen, der einen Schwenkhebel 17 besitzt, welcher am Druckkörper 7 um die Schwenkachse 16 schwenkbar gelagert ist und mit einer aufwärts gerichteten Nase 17a, die gegen die Schwenkachse 16 um den Abstand d einwärts versetzt ist, den Zentralkörper 4 berührt, so dass bei einer Axialverschiebung des Druckkörpers 7 in Richtung auf den Zentralkörper 4 der Schwenkhebel 17 um seine Achse 16 gedreht wird und mit seinem freien Ende einen Stellstift 18, welcher am oberen Ende eine Eisenmasse 19 trägt, gegen einen Signalwandler 15 bewegt. Der Signalwandler 15 ist in der dargestellten Ausführungsform als Näherungsschalter ausgebildet, dem sich die am Schwenkhebel 17 befestigte Eisenmasse 19 mit einsetzender Axialverschiebung (Spielbewegung) des Bearbeitungswerkzeugs 30 und des Druckkörpers 7 bis auf einen geringen Luftspalt 20 annähert, bis schliesslich das axiale Lagerspiel durchlaufen ist und die Stirnflächen des Druckkörpers 7 und des Zentralkörpers 4 aneinander anschlagen.

Bei dieser Ausführungsform, bei welcher der Signalgeber 17-19 an dem Spannwerkzeug 5 oder einem daran befestigten Druckkörper 7 angeordnet ist, wird der Signalgeber durch die Spielbewegung des Bearbeitungswerkzeuges 30, Spannwerkzeuges 5 und Druckkörpers 7 aktiviert, wobei jedoch auch die Arbeitsbewegung des Bearbeitungswerkzeuges 30 auf den Signalgeber übertragen wird. Der Stellstift 18, 19 des Signalgebers 17, 19 läuft daher mit der Periode der Arbeitsbewegung periodisch an dem Signalwandler 15 vorbei und erzeugt — wenn durch Aktivierung des Signalgebers der Luftspalt 20 hinreichend gering geworden ist — ein periodisches Steuersignal, welches am elektrischen Ausgang 24 des Signalwandlers 15 abgegeben wird. Die Periode des Steuersignals kennzeichnet dabei die Periode der Arbeitsbewegung, d. h. bei einer Drehbewegung die tatsächliche Drehzahl des Bearbeitungswerkzeuges 30.

Wird mit dem Einsetzen der Spielbewegung das elektrische Steuersignal erzeugt, so lässt sich daraus in einer dem Signalwandler 15 nachgeschalteten Auswerteelektronik 40 ein Steuerbefehl ableiten, der zur Änderung der Vorschubgeschwindigkeit des Vorschubantriebs verwendet wird und diese Änderung der Vorschubgeschwindigkeit durchführt, während das Bearbeitungswerkzeug die restliche Spielbewegung durchführt. Das Lagerspiel zwischen Bearbeitungswerkzeug 30 und Arbeitsspindel 2 muss für diesen Zweck ausreichend gross sein, damit die zur Vorschubänderung benötigte Einstellzeit zur Verfügung steht.

Eine weitere Eigenschaft ist, dass der Sensorhebel und insbesondere die Sensorschneide nicht von der Bearbeitungskraft belastet werden. Im Arbeitsbetrieb, also z. B. beim Bohren, setzt sich die Axialkraft der Vorschubbewegung auf den Stirnflächen der Teile 4 und 7 ab, und die Umfangskraft über den Paßstift 8 bzw. eine der oben beschriebenen Alternativen.

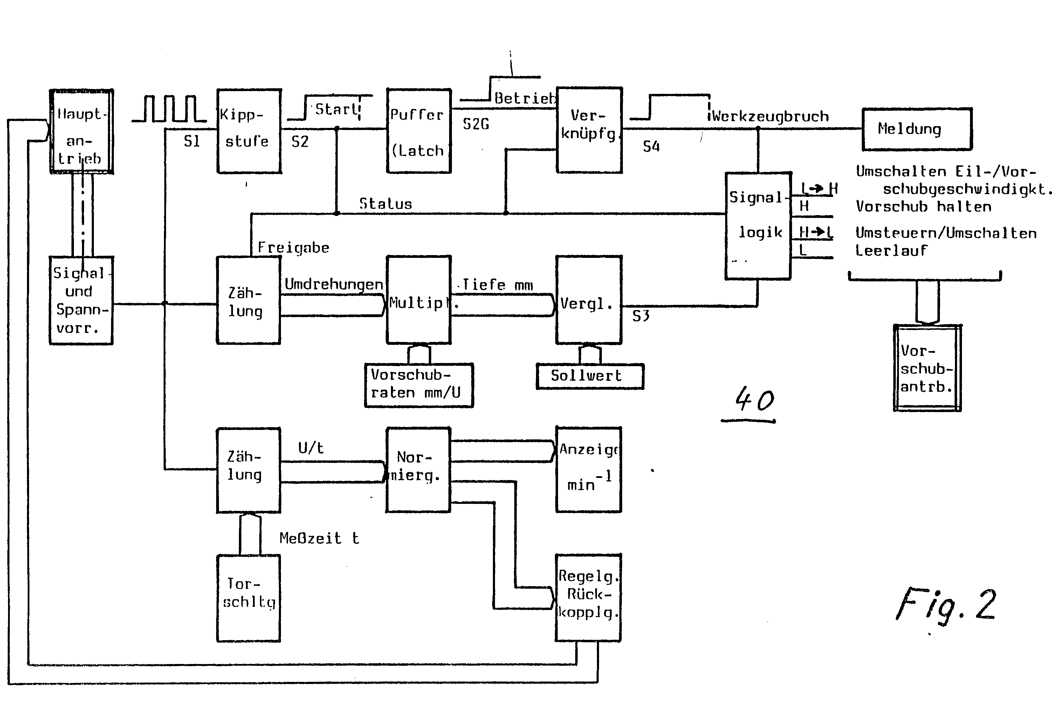

Durch die aufgebrachte Axialkraft beim Druck des Bearbeitungswerkzeuges auf die Werkstückoberfläche wird der Druckkörper 7 wie oben beschrieben betätigt. Dadurch schwenkt der Hebel 17 die Eisenmasse 19 in den Ansprechbereich des Näherungsschalters 15. Somit wird bei Rotation der Arbeitsspindel 2 bei jeder Umdrehung der Näherungsschalter genau einmal bedämpft und wieder freigegeben, was am Signalausgang des Näherungsschalters eine in Fig. 2 schematisch wiedergegebene Pulsfolge erzeugt, die eine wesentliche Voraussetzung für die Anwendung der nachfolgend beschriebenen Steuerung ist.

Die Rückstellung des Druckkörpers 7 in Leerlaufstellung kann durch Ausnutzung der Zentrifugalkraft der Eisen- und Hebelmasse sowie — bei senkrecht angeordneten Arbeitsspindeln — durch das Eigengewicht des Spannwerkzeuges oder eine Rückstellfeder erfolgen. Das erzeugte Steuersignal wird ausgewertet und weiterverarbeitet mit Hilfe logischer Verknüpfungen und Verknüpfungsschaltungen unter Einbeziehung der im Programmspeicher der Maschinensteuerung enthaltenen Sollwerte, und zwar auf folgende Weise (vgl. Fig. 2):

Signal S1: Aus der Frequenz der Pulsfolge wird in an sich bekannter Weise die Drehzahl der Spindel gebildet, indem über eine Torschaltung die Meßzeit t definiert und das Zählergebnis normiert wird.

Signal S2: Aus dem Vorhandensein oder Verschwinden der Pulsfolge wird in an sich bekannter Weise ein statisches binäres Signal gebildet.

Signal S3: Die Anzahl der Pulse während des Anstehens des Signals S2 wird gezählt und im Computer der Steuerung mit Einstell- und Sollwerten zur Berechnung des Tiefenmaßes verknüpft.

Signal S4: Das Signal S2 wird für die Dauer des Bearbeitungsvorgangs gepuffert und in einer Koinzidenzschaltung mit dem ungepufferten Signal S2 verglichen.

Die Auswertung der so gebildeten Signale erspart mit Signal S1 einen sonst üblichen und bei Maschinensteuerungen mit Drehzahlregelung unentbehrlichen Drehzahlgeber. Die von der Vorrichtung abgegebene Pulsfrequenz kann von einer einfacheren Maschinensteuerung zur Drehzahlüberwachung mit Hilfe einer Anzeige oder in komfortableren Anlagen zur Drehzahlregelung benutzt werden, wie in Fig. 2 dargestellt.

Die Auswertung der Pulsfolge mit Signal S2 in Verbindung mit den Funktionseigenschaften der Vorrichtung gestattet die Initialisierung und Beendigung des Bearbeitungsprozesses in dem Moment, in dem das Werkzeug das Werkstück berührt bzw. an der Unterkante verläßt. Hierzu wird S2 direkt auf die Signallogik geleitet, die die in Fig. 2 angegebenen Pegel am Ausgang erzeugt, welche in der Maschinensteuerung in an sich bekannter Weise in die genannten Steuerbefehle für die Antriebseinheit umgesetzt werden.

Die Messung und Kontrolle der Bohrtiefe überwacht eine Maschinensteuerung entweder über einen Positionsgeber in an sich bekannter Art oder in besonderer Ausgestaltung mit Hilfe des Signals S3. Maschinen mit automatischem Vorschub sind häufig noch so gebaut, daß die Vorschubbewegung über ein Wechselgetriebe von der Hauptspindel abgeleitet wird. Das Wechselgetriebe ist einstellbar auf verschiedene Vorschubgeschwindigkeiten, die in mm/Umdrehung definiert sind. Infolge dieser festen Zuordnung ist es möglich, aus den anhand von Signal S1 gezählten Impulsen die Position des Werkzeugs zu berechnen und kostspielige Weggeber einzusparen. Insbesonders ist zu dem Zweck eine Einstellmöglichkeit für verschiedene Vorschubraten an der Steuerung vorgesehen, deren Einstellwerte in der in Fig. 2 dargestellten Weise mit der Umdrehungszählung verknüpft, das Tiefenmaß ergeben. Dieses Tiefenmaß wird mit dem im Programmspeicher enthaltenen Sollwert verglichen und das Ergebnis der Signallogik zugeführt, welche die bereits beschriebenen Ausgangspegel setzt und die Ansteuerung des Vorschubantriebs vornimmt.

4

Das Signal S4 wird benutzt, um einen Werkzeugbruch während des Bearbeitungsvorgangs zu entdecken. Hierzu dient die elektronische Pufferung des Signals S2 für die Dauer des Bearbeitungsvorgangs, sobald diese Signalleitung beim Ansprechen der signalgebenden Vorrichtung das Ausgangssignal bildet. Bezeichnet man mit S2G das gepufferte und mit S2 das ungepufferte Signal, dann ergibt sich für das Signal S4 folgende Wahrheitstabelle :

| S2 | S2G | S4 | Bedeutung |
|----|-----|----|-----------|
| L | L | L | Leerlauf |
| H | .H | H | Arbeitsgang |
| L | H | ↓ | Werkzeugbruch |

Die in der vorstehenden Tabelle und in Fig. 2 benutzten Symbole L und H entsprechen der Definition der Logikpegel nach DIN. Pfeile deuten die Signaländerung in Richtung von einem zum anderen Pegel an.

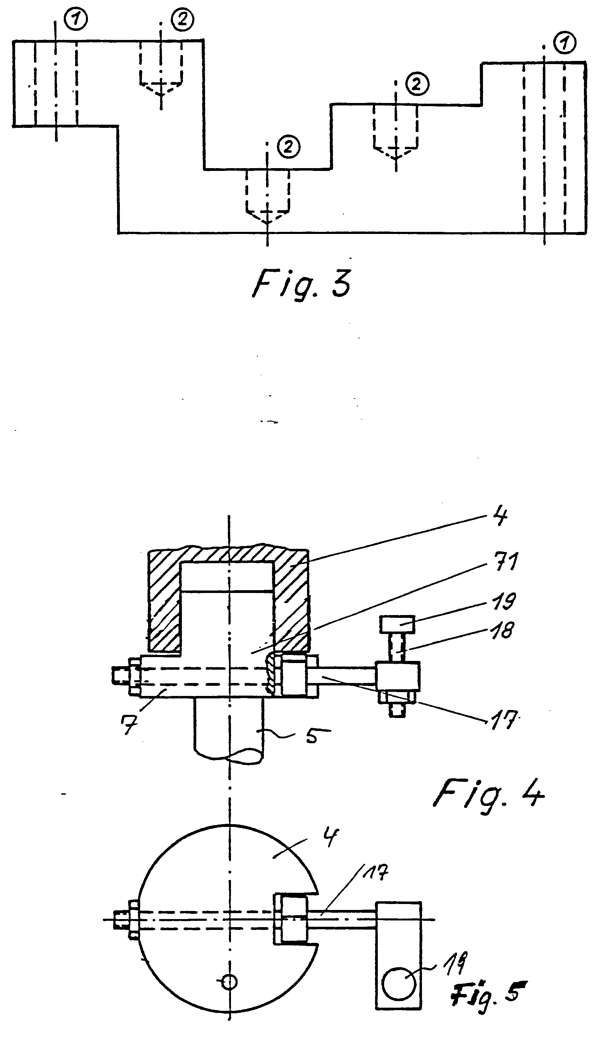

Mit diesem Verfahren zur Produktion der Signale S1 bis S4 und einer geeigneten Vorrichtung zur Erzeugung des Signals S1, für die eine Ausführung angegeben ist, ergeben sich vielfältige Anwendungsmöglichkeiten und Verbesserungen praxisüblicher z. B. mit numerischen Steuerungen ausgeführter Bearbeitungsprozesse. Fig. 3 zeigt den Einsatz der Vorrichtung mit Signallogik für ein typisches Werkstück, bei dem die Aufgaben bestehen :

(1) Löcher in unterschiedlichen Höhen in unterschiedlichen Materialstärken durchbohren

(2) Löcher in unterschiedlichen Höhen mit gleicher Tiefe bohren.

In beiden Fällen wird der Werkzeugvorschub mit Eilganggeschwindigkeit betätigt bis das von der Vorrichtung abgegebene Signal S2 das Erreichen der Werkstückoberfläche meldet. Die Verarbeitung des Signals in der Maschinensteuerung bewirkt das automatische Umschalten auf Bearbeitungs-Vorschubgeschwindigkeit. In dieser Weise werden alle in Fig. 3 dargestellten fünf Bohrungen ohne Rücksicht auf ihre unterschiedliche Oberflächenhöhe angesteuert.

Im Beispiel (1) kann die Steuerung den Vorschub solange aufrechterhalten, bis das Signal S2 abfällt. In diesem Moment hat das Werkzeug auch bei unterschiedlichen Materialstärken mit Sicherheit die Unterkante des Werkstücks durchbohrt, so daß von der Steuerung unverzüglich der Rückholvorgang des Werkzeugträgers bewirkt werden kann. Eine bei herkömmlichen Werkzeugträgern benötigte Programmierung der Bearbeitungsanfangs- und -endpositionen im Absolut- oder Kettenmaß entfällt. Ebenso entfällt die bei dieser Programmierart erforderliche Einbeziehung der Werkzeuglänge als sogenannte Werkzeuglängen-Korrektur in die Bestimmung der zu programmierenden Positionsdaten. Ein weiterer wesentlicher Vorteil ist, daß der langsame Vorschubvorgang nur während der erforderlichen Zeit der Werkstückbearbeitung erfolgt, und daß unmittelbar vor dem Beginn und sofort nach der Beendigung des Bohrvorgangs ohne Zeitverlust umgesteuert werden kann, was zu erheblichen Zeitgewinnen gegenüber herkömmlichen Programmabläufen führt.

Auch im Bohrbeispiel (2) brauchen die unterschiedlichen Anfangspositionen der Bohrbewegung, die sich aufgrund der unterschiedlichen Werkstückhöhen ergeben, nicht berücksichtigt zu werden. Die Messung der Bohrtiefe erfolgt mit dem Wert 0 ab Werkstückoberkante, so daß für alle gleich tiefen Bohrungen nur ein Tiefenmaß anzugeben ist.

Weitere Vorteile ergeben sich vor allem dann, wenn Bearbeitungsvorgänge der gleichen Position mit unterschiedlichen Werkzeugen, z. B. für Bohren, Aufreiben und Ansenken eines Loches zu erfolgen haben. Die unterschiedlichen Längen dieser Werkzeuge spielen keine Rolle, so dass die drei genannten Vorgänge mit nur einem Steuerprogramm abgearbeitet werden können.

Die für die axiale Arbeitsbewegung eines Werkzeuges beschriebenen Funktionen und Signalauswertungen sind sinngemäss zu übertragen auf eine weitere Ausgestaltung, die in Fig. 4 und 5 ausschnittsweise eine Ausführung der Vorrichtung für am Umfang schneidende rotierende Werkzeuge darstellt. Typische Werkzeuge dieser Art sind Fräser oder Schleifscheiben.

Die für die Aktivierung des Näherungsschalters erforderliche Annäherung der Eisenmasse 19 in den Schaltbereich wird dabei über eine Verdrehung des Druckkörpers 7 der Fig. 1, der mit einem vorgegebenen Rotationsspiel drehbar im Zentralkörper 4 gelagert ist, bewirkt, wobei der Hebel 17 entsprechend umgestaltet ist. Die Prinzipien der Kraftübertragung mit Entlastung der Sensorflächen und die Signalgabe und deren Auswertungen sind die gleichen wie bei der Ausführung nach Fig. 1 und bedürfen daher keiner nochmaligen Beschreibung, da sie auch aus Fig. 4 und 5 deutlich werden.

Ein weiterer Effekt der Vorrichtung ist deren Verwendungsmöglichkeit nach Ausführung der Fig. 4 und 5 auch für jede andere Art rotierender Bearbeitungswerkzeuge mit axialer Hauptarbeitsrichtung. Da nämlich jedes axial vorgetriebene rotierende Werkzeug zwangsläufig Schneidkanten (bzw. Schneid- oder Schleifflächen) und keine Punktspitze haben muss, entstehen bei Kontakt mit einer Werkstückoberfläche Umfangskräfte, die zumindest ab einem bestimmten Werkzeugdurchmesser ausreichen, um die Betätigungskraft für den Schwenkhebel 17 aufzubringen.

**Patentansprüche**

1. Vorrichtung zur Überwachung und Steuerung eines Bearbeitungswerkzeuges (30), welches mittels einer Spannvorrichtung (1) an der Arbeitsspindel (2) einer Werkzeugmaschine befestigbar ist, dadurch gekennzeichnet, dass die Überwachungsvorrichtung als Spannvorrichtung (1) zwischen Arbeitsspindel (2) und Bearbeitungswerkzeug (30) einsetzbar ist sowie ein begrenztes Übertragungsspiel gewährleistet, und dass das Bearbeitungswerkzeug (30) bei Berührungskontakt mit einem Werkstück ausgehend von einer einsetzenden Spielbewegung ein Steuersignal erzeugt, das sich zur Steuerung eines Spindelantriebs und/oder -vorschubs eignet.

2. Vorrichtung nach Anspruch 1, dadurch gekennzeichnet, dass die Spannvorrichtung (1) zum Einspannen des Bearbeitungswerkzeuges (30) ein Spannwerkzeug (5) besitzt, welches dem Bearbeitungswerkzeug (30) ein in Achsrichtung der Arbeitsspindel (2) wirksames Axialspiel verleiht.

3. Vorrichtung nach Anspruch 1 oder 2, dadurch gekennzeichnet, dass die Spannvorrichtung (1) ein Spannwerkzeug (5) zum Einspannen des Bearbeitungswerkzeuges (30) besitzt, das gegenüber der Arbeitsspindel (2) ein Rotationsspiel aufweist.

4. Vorrichtung nach einem der vorstehenden Ansprüche, dadurch gekennzeichnet, dass die Spannvorrichtung (1) einen Signalgeber (17-19) enthält, der von der Spielbewegung des Spannwerkzeuges (5, 7) mechanisch in eine Aktivstellung setzbar ist, die mittels eines Signalwandlers (15) in ein elektrisches Steuersignal umwandelbar und an einem elektrischen Ausgang (24) zur Weiterverarbeitung abgebbar ist.

5. Vorrichtung nach Anspruch 4, dadurch gekennzeichnet, dass der Signalgeber an dem Spannwerkzeug (5) oder einem daran befestigten Teil (7) angeordnet ist und zur Erzeugung eines Steuersignals dient, welches neben der Spielbewegung des Bearbeitungswerkzeuges (30) auch die Periodendauer der Arbeitsbewegung des Bearbeitungswerkzeuges (30) anzeigt.

6. Vorrichtung nach einem der vorstehenden Ansprüche, dadurch gekennzeichnet, dass das Steuersignal während der Spielbewegungsphase und des anschliessenden Bearbeitungsvorganges des Bearbeitungswerkzeuges (30) verfügbar ist.

7. Vorrichtung nach einem der vorstehenden Ansprüche, dadurch gekennzeichnet, dass der Signalgeber (17-19) einen Schwenkhebel (17) enthält, der bei einsetzender Spielbewegung in seine Aktivstellung schwenkbar ist, und dass der Signalwandler (15) ein Näherungsschalter ist, der anspricht, wenn sich der Schwenkhebel (17) in Aktivstellung befindet.

8. Vorrichtung nach einem der vorstehenden Ansprüche, dadurch gekennzeichnet, dass der Schwenkhebel (17) am Spannwerkzeug (5) oder einem fest mit dem Spannwerkzeug (5) verbundenen Druckkörper (7) angelenkt ist, dessen freies Ende (18, 19) mit der Periodendauer der Arbeitsbewegung periodisch an dem Signalwandler (15) vorbeiläuft und in Aktivstellung des Schwenkhebels (17) ein periodisches Steuersignal, und in Nicht-Aktivstellung kein Steuersignal am Ausgang (24) erzeugt.

9. Vorrichtung nach einem der vorstehenden Ansprüche, dadurch gekennzeichnet, dass das Spannwerkzeug (5) zur Aufnahme des Bearbeitungswerkzeuges (30) fest mit einem Druckkörper (7) verbunden ist, der um einen Spielweg axial verschiebbar in einem Zentralkörper (4) gelagert ist, der fest mit der Arbeitsspindel (2) verbindbar ist.

10. Vorrichtung nach einem der vorstehenden Ansprüche, dadurch gekennzeichnet, dass dem elektrischen Ausgang (24) eine Auswerteelektronik (40) nachgeschaltet ist, welche von dem Steuersignal zugeordnete Steuerbefehle für den Antrieb und die Überwachungs-Anzeige- und Regeleinrichtungen ableitet.

11. Vorrichtung nach Anspruch 10, dadurch gekennzeichnet, dass die Auswerteelektronik (40) von der Anstiegsflanke des Steuersignals einen ersten Steuerbefehl ableitet, der die Vorschubsteuerung des Bearbeitungswerkzeuges (30) noch während der Spielbewegung von Leerlaufvorschub auf Arbeitsvorschub umschaltet.

12. Vorrichtung nach einem der vorstehenden Ansprüche, dadurch gekennzeichnet, dass die Auswerteelektronik (40) das Steuersignal ständig mit einem Sollwert vergleicht und bei einem vorzeitigen Ende des Steuersignals den Bruch des Bearbeitungswerkzeuges (30) anzeigt.

**Claims**

1. A device for the supervision and control of a machining tool (30) which may be fastened by means of a chuck (1) to the work spindle (2) of a machine tool, characterized in that the supervision device may be inserted as the chuck (1) between the work spindle (2) and the machining tool (30) and also guarantees a limited play in transmission, and that the machining tool (30) upon contact with a work-piece, proceeding from the start of a movement of play, generates a control signal which is suitable for the control of a spindle drive and/or feed.

2. A device as in Claim 1, characterized in that the chuck (1) for clamping the machining tool (30) has a clamping tool (5) which endows the machining tool (30) with an axial play effective in the direction axial to the work spindle (2).

3. A device as in Claim 1 or 2, characterized in that the chuck (1) has a clamping tool (5) for clamping the machining tool (30), which exhibits a play in rotation with respect to the work spindle (2).

4. A device as in one of the preceding Claims, characterized in that the chuck (1) contains a signal transmitter (17-19) which by the movement of play of the clamping tool (5, 7) may be set mechanically in an active position which by means of a signal converter (15) may be converted into an electrical control signal and transmitted to an electrical output (24) for further processing.

5. A device as in Claim 4, characterized in that the signal transmitter is arranged on the clamping tool (5) or a part fastened to it and serves for the generation of a control signal which indicates besides the movement of play of the machining tool (30) also the period of the working movement of the machining tool (30).

6. A device as in one of the preceding Claims, characterized in that the control signal is available during the phase of the movement of play and the succeeding machining process of the machining tool (30).

7. A device as in one of the preceding Claims, characterized in that the signal transmitter (17-19) contains a rocking lever (17) which upon a movement of play starting is able to pivot into its active position, and that the signal converter (15) is a proximity switch which responds if the rocking lever (17) is in the active position.

8. A device as in one of the preceding Claims, characterized in that the rocking lever (17) is hinged to the clamping tool (5) or to a pressure body (7) which is connected rigidly to the clamping tool (5) and the free end (18, 19) of which runs periodically past the signal converter (15) at the period of the wortking movement and in the active position of the rocking lever (17) generates at the output (24) a periodic control signal and in the non-active position generates no control signal.

9. A device as in one of the preceding Claims, characterized in that the clamping tool (5) for receiving the machining tool (30) is connected rigidly to a pressure body (7) which is supported to be able to shift axially by a certain amount of play in a central body (4) which may be connected rigidly to the work spindle (2).

10. A device as in one of the preceding Claims, characterized in that an electronic evaluator equipment (40) is connected after the electrical output (24), which derives from the control signal associated control commands for the drive and the indicator and regulating devices for the supervision.

11. A device as in Claim 10, characterized in that the electronic evaluator equipment (40) derives from the leading edge of the control signal a first control command which switches over the feed control of the machining tool (30) even during the movement of play, from idling feed to working feed.

12. A device as in one of the preceding Claims, characterized in that the electronic evaluator equipment (40) constantly compares the control signal with a desired value and upon a premature end of the control signal indicates breakage of the machining tool (30).

**Revendications**

1. Dispositif pour le contrôle et la commande d'un outil d'usinage (30), qui peut être fixé au moyen d'un dispositif de serrage (1) à l'arbre moteur (2) d'une machine-outil, caractérisé en ce que le dispositif de contrôle peut être mis en œuvre comme dispositif de serrage (1) entre un arbre moteur (2) et un outil d'usinage (30), en garantissant un jeu de transmission limité, et en ce que l'outil d'usinage (30), lors du contact d'effleurement avec une pièce à usiner, produit un signal de commande, résultant d'un déplacement d'enfoncement dû au jeu, signal qui est approprié pour la commande d'un entraînement et/ou d'une avance d'arbre.

2. Dispositif suivant la revendication 1, caractérisé en ce que le dispositif de serrage (1) comprend, pour le montage de l'outil d'usinage (30), un outil de serrage (5) qui confère à l'outil d'usinage (30) un jeu axial agissant dans la direction de l'axe de l'arbre moteur (2).

3. Dispositif suivant la revendication 1 ou 2, caractérisé en ce que le dispositif de serrage (1) comprend, pour le montage de l'outil d'usinage (30), un outil de serrage (5), qui présente un jeu de rotation par rapport à l'arbre moteur (2).

4. Dispositif suivant l'une des revendications précédentes, caractérisé en ce que le dispositif de serrage (1) comporte un émetteur de signaux (17-19) qui peut être, par le déplacement du jeu de l'outil de serrage (5, 7), mis mécaniquement dans une position active, qui peut être transformée au moyen d'un convertisseur de signaux (15) en un signal de commande électrique et qui peut être délivrée à une sortie électrique (24) pour un traitement ultérieur.

5. Dispositif suivant la revendication 4, caractérisé en ce que l'émetteur de signaux est disposé sur l'outil de serrage (5) ou sur une pièce (7) qui y est fixée et en ce qu'il sert à engendrer un signal de commande qui indique, outre le déplacement de jeu de l'outil d'usinage (30), la durée de période du mouvement d'usinage de l'outil d'usinage (30).

6. Dispositif suivant l'une des revendications précédentes, caractérisé en ce que le signal de commande est disponible pendant la phase de déplacement de jeu et pendant l'opération d'usinage consécutive de l'outil d'usinage (30).

7. Dispositif suivant l'une des revendications précédentes, caractérisé en ce que l'émetteur de signaux (17-19) comporte un levier oscillant (17) qui peut être amené à pivoter dans sa position active lors du déplacement d'enfoncement par jeu et en ce que le convertisseur de signaux (15) est un commutateur de proximité qui réagit lorsque le levier oscillant (17) se trouve en position active.

8. Dispositif suivant l'une des revendications précédentes, caractérisé en ce que le levier oscillant (17) est articulé sur l'outil de serrage (5) ou sur un élément de poussée (7), relié de manière fixe à l'outil de serrage (5), en ce que l'extrémité libre (18, 19) du levier passe périodiquement devant le convertisseur de signaux (15) avec la durée de période du mouvement d'usinage et engendre à la sortie (24) un signal de commande périodique dans la position active du levier oscillant (17) et n'engendre aucun signal de commande en position inactive.

9. Dispositif suivant l'une des revendications précédentes, caractérisé en ce que l'outil de serrage (5) est, pour recevoir l'outil d'usinage (30), relié fixement à un élément de poussée (7), qui est monté de manière à pouvoir coulisser axialement d'une distance de jeu dans un corps central (4) qui est relié de manière fixe à l'arbre moteur (1).

10. Dispositif suivant l'une des revendications précédentes, caractérisé en ce que, à la sortie électrique (24), est monté un appareil électronique d'évaluation (40) qui déduit du signal de commande des ordres de commande coordonnés pour l'entraînement et pour des dispositifs indicateurs de contrôle et des dispositifs de réglage.

11. Dispositif suivant la revendication 10, caractérisé en ce que l'appareil électronique d'évaluation (40) déduit, du flanc montant du signal de commande, un premier ordre de commande qui commute la commande d'avance de l'outil d'usinage (30), encore pendant le déplacement de jeu, de l'avance en marche à vide à l'avance d'usinage.

12. Dispositif suivant l'une des revendications précédentes, caractérisé en ce que l'appareil électronique d'évaluation (40) compare en permanence le signal de commande avec une valeur de consigne et indique la rupture de l'outil d'usinage (30) lors d'une fin prématurée du signal de commande.

*Fig. 1*

Hauptantrieb

S1  Kippstufe  S2  Start

Puffer
(Latch  S2G  Betrieb  Verknüpfg.  S4  Werkzeugbruch  Meldung

Status

Signal
und
Spannvorr.

Freigabe

Zählung  Umdrehungen  Multipl.  Tiefe mm  Vergl.  S3

Signallogik  L→H
H
H→L
L

Umschalten Eil-/Vor-
schubgeschwindigkt.
Vorschub halten

Umsteuern/Umschalten
Leerlauf

Vorschubraten mm/U  Sollwert

40

Vorschubantrb.

Zählung  U/t  Normierg.  Anzeige
min⁻¹

Meßzeit t

Torschltg

Regelg.
Rückkopplg.

*Fig. 2*

Fig. 3

Fig. 4

Fig. 5